**Europäisches Patentamt**

**European Patent Office**

**Office européen des brevets**

(19)

(11) Veröffentlichungsnummer: **0 034 563**
**A1**

(12) ## EUROPÄISCHE PATENTANMELDUNG

(21) Anmeldenummer: **81730017.1**

(22) Anmeldetag: **16.02.81**

(51) Int. Cl.³: **B 01 D 53/34**

(30) Priorität: 15.02.80 DE 3006198
21.07.80 DE 3027910
03.12.80 DE 3045934

(43) Veröffentlichungstag der Anmeldung:
26.08.81 Patentblatt 81/34

(84) Benannte Vertragsstaaten:
AT BE CH FR GB IT LI LU NL SE

(71) Anmelder: Gatzke, Horst, Dr. Ing.
Wundtstrasse 58-60
D-1000 Berlin 19(DE)

(72) Erfinder: Gatzke, Horst, Dr. Ing.
Wundtstrasse 58-60
D-1000 Berlin 19(DE)

(74) Vertreter: Meinig, Karl-Heinz
PATENTANWÄLTE-PFENNING-MAAS-MEINIG-SPOTT
Kurfürstendamm 170
D-1000 Berlin 15(DE)

(54) Verfahren zur Beseitigung von die Umwelt belastenden, in Rauchgasen von Feuerungsanlagen aller Art anfallenden Schadstoffen und Vorrichtung zur Rückgewinnung wenigstens eines erheblichen Teils der in den Rauchgasen vorhandenen Energie.

(57) Verfahren zur Beseitigung von Schadstoffen aus Rauchgasen, wie sie bei Feuerungsanlagen, beispielsweise in Ziegeleien oder anderen Industriezweigen, anfallen. Die Schadstoffe in Form von Schwefelverbindungen, Chlor-, Fluor- und Stickstoffkomponenten werden durch intermittierend verwirbelndes Einbringen von Ammoniak in flüssiger Form in die Abgasseite der Feuerungsanlagen in Verbindung mit anderen, diese Schadstoffe bindenden Reagenzien, aus dem Rauchgas ausgeschieden. Die im Rauchgas nicht unerhebliche Restmenge an Wärmeenergie wird zum erheblichen Teil durch besondere Gestaltung von Wärmetauschern zurückgewonnen.

./...

EP 0 034 563 A1

Croydon Printing Company Ltd.

Fig. 3

Fig. 5

Verfahren zur Beseitigung von die Umwelt belastenden, in Rauchgasen von Feuerungsanlagen aller Art anfallenden Schadstoffen und Vorrichtung zur Rückgewinnung wenigstens eines erheblichen Teils der in den Rauchgasen vorhandenen Energie

Die Erfindung bezieht sich auf ein Verfahren zur Beseitigung von die Umwelt belastenden, in Rauchgasen von Feuerungsanlagen anfallenden Schadstoffen nach dem Oberbegriff des Anspruchs 1 und auf eine Vorrichtung zur Durchführung des Verfahrens.

Die in den Rauchgasen mitgeführten Schwefelverbindungen in Kombination mit anderen Schadstoffen tragen, wenn sie mit den Rauchgasen ins Freie entlassen werden, zu einem sehr erheblichen Teil zu der Luftverschmutzung bei und stellen somit eine wesentliche nachteilige Umweltbelastung dar. Sie führen, insbesondere in industriellen Ballungsgebieten, zu dem gefürchteten sogenannten "Smog", der bei Erreichung einer bestimmten Konzentration

- 2 -

einen Alarm auslöst und Abwehrmaßnahmen erforderlich macht.

Um die mit den Rauchgasen anfallenden Schadstoffe
unschädlich zu machen, ist es bekannt, Kalkstaub
in die die Rauchgase ins Freie entlassenden
Leitungen, beispielsweise in einen Schornstein,
einzublasen, wobei durch Reaktion beispielsweise
der Schwefelverbindung mit dem Kalkstaub Gips
($CaSO_4$) entsteht. Dieser Gips muß aus den Rauchgasen ausgefiltert werden, da auch er sonst eine
unerwünschte und schädigende Belastung der Umwelt
darstellt. Außerdem ist diese bekannte Methode
umständlich und aufwendig, einmal wegen der erforderlichen Zurverfügungstellung des Kalkstaubes,
vor allem aber deshalb, weil der gewonnene Gips
nur selten in seiner anfallenden Form und Menge
verwertbar ist, so daß er als unerwünschter Abfall
behandelt und beseitigt werden muß, womit ein
weiterer zusätzlicher Aufwand verbunden ist.
Entsprechendes gilt für Fluor-, Chlor- und
Stickstoffverbindungen.

Demgegenüber liegt der Erfindung die Aufgabe
zugrunde, ein Verfahren zu schaffen, das einerseits eine befriedigende Beseitigung der Schadstoffverbindungen ermöglicht, und bei der auf einfachere
und bequemere Weise ein Produkt erzielt wird, das
ohne Schwierigkeiten einer nutzbringenden Verwertung zugeführt werden kann und eine Vorrichtung
vorzugeben, die eine Wärmerückgewinnung aus den Rauchgasen zu wenigstens einem erheblichen Teil ermöglicht.

Diese Aufgabe wird für das Verfahren erfindungsgemäß
durch die im Kennzeichen des Anspruchs 1 gegebenen

- 3 -

Merkmale gelöst.

Vorteilhafte Ausgestaltungen und Weiterbildungen dieses Verfahrens ergeben sich aus den Unteransprüchen 2 bis 9.

Die vorliegende Aufgabenlösung für die Vorrichtung ergibt sich erfindungsgemäß aus dem Kennzeichen des Anspruchs 10.

Das Ammoniak steht ohne Schwierigkeiten in den erforderlichen Mengen zur Verfügung und läßt sich leicht transportieren, und bei der Reaktion mit den Schwefelverbindungen der Rauchgase fällt pulverförmiges Ammonsulfat an, das als Düngemittel ebenfalls ohne Schwierigkeiten einer nutzbringenden Verwendung zugeführt werden kann. Besonders in eng besiedelten Gebieten empfiehlt sich das Ammonsulfat aus den Rauchgasen abzuscheiden, wobei es ohne weitere Behandlung als Düngemittel verwendet werden kann. Entsprechendes gilt für andere Komponenten der Reaktionsprodukte.

Besonders vorteilhaft ist die intermittierende Eindüsung des unter hohem Druck stehenden Ammoniaks. Hierdurch wird eine intensive Durchwirbelung und damit ein größtmöglicher Kontakt mit den Schadstoffen der Rauchgase und dem Ammoniak gewährleistet mit der Folge, daß optimale Reaktionen erfolgen zur Bildung von staubförmigen Reaktionsprodukten, wie beispielsweise Ammonsulfat. Zweckmäßig ist es hierbei, die Düsen über die Länge der die Rauchgase führenden Leitung zu verteilen, wobei die Zeitpunkte der Impulseingaben des Ammoniaks und anderer Reagenzien bei den einzelnen

- 4 -

Düsen unterschiedlich sein können. Auch eine umfangsmäßige Versetzung der Düsen erscheint im Interesse einer optimalen Durchwirbelung der Rauchgase vorteilhaft. Ein weiterer wesentlicher Vorteil ist dadurch gegeben, daß bei der Eindüsung der Reagenzien eine Anpassung ihrer Menge an den unterschiedlichen Schadstoffgehalt der Rauchgase möglich ist dadurch, daß sowohl der Druck als auch die Impulsfolge und die Impulsfrequenz variiert werden können. Bei vielen großtechnischen Verfahren wird in der Regel beispielsweise die Schwefelkonzentration der Rauchgase und auch die Form des Schwefelgases konstant sein. Bei Prozessen jedoch, wo aufgrund unterschiedlicher Beschaffenheit der Kohle oder der thermisch zu behandelnden Mineralien mit großen Schwankungen des Schwefelanfalles, beispielsweise bei pyrithaltiger Kohle oder bei pyrithaltigen Tonen, zu rechnen ist, wird von dieser Möglichkeit der Variierung des Ammoniaks Gebrauch zu machen sein, um die Zugabe des Ammoniaks durch Verdünnung oder Änderung des Druckes, der Impulsdauer und der Impulsfolge optimal an den jeweiligen Schwefelgehalt der Rauchgase anzupassen, der beim Betrieb unterschiedlich groß und auch unterschiedlichen Schwankungen unterworfen sein kann.

Um dies tun zu können, ist es vorteilhaft, vor und nach einer Impulsstelle am Ausgang in der die Rauchgase ins Freie entlassenden Leitung kontinuierlich oder intermittierend den Schwefelgehalt der Rauchgase zu messen, um in Abhängigkeit von dem Meßergebnis die einzusprühende Menge des Ammoniaks steuern zu können. Diese Steuerung kann

- 5 -

durch eine den jeweiligen Meßwert auswertende Einrichtung erfolgen, durch die automatisch die Verdünnung, der Druck, die Impulsdauer und die Impulsfrequenz einzeln oder gegebenenfalls gleichzeitig so variiert werden, daß das Rauchgas praktisch frei von Schwefelverbindungen die Leitung verläßt. Auf diese Weise ist es möglich, die Rauchgase vor dem Eintritt ins Freie praktisch vollständig von den Schwefelverbindungen und den anderen Schadstoffen zu befreien.

Das erfindungsgemäße Verfahren ermöglich auch die Verwendung minderwertiger billiger Brennstoffe, die vielfach wegen ihres hohen, in den Rauchgasen befindlichen Schwefelanteiles sich verbietet. So kann beispielsweise Schweröl als Brennstoff benutzt werden, auf dessen Verwendung man im Interesse des Umweltschutzes meistens bisher hat verzichten müssen.

Das erfindungsgemäße Verfahren kann weiterhin Anwendung finden in beliebigen großtechnischen Prozessen der Chemie- und Hüttentechnik, in denen Schwefel und/oder andere Schadstoffe anfallen.

Industrielle Abgase fallen zwar oft in großen Mengen an und kennzeichnen sich durch einen hohen Wärmeinhalt, wirken sich aber auf die bekannten Wärmeaustauscher insofern als nur mit Schwierigkeiten zu behandelndes Fluid aus, weil sie aggressive Komponenten enthalten, die die Trennwände des Wärmeaustauschers in relativ kurzer Zeit zersetzen oder seinen durchströmbaren Querschnitt zusetzen.

- 6 -

Es wird daher in der Vergangenheit einmal versucht, dem Rauchgas nur so viel Wärme zu entziehen, daß dieses den Wärmetauscher noch mit einer Temperatur verläßt, die oberhalb des Kondensationspunktes wenigstens der aggressiven Komponenten des Rauchgases liegt, und zum anderen das Material der Trennwände beziehungsweise Rohre und dergleichen Konstruktionselemente des Wärmeaustauschers so zu wählen oder qualitativ zu verbessern, daß die aggressiven Komponenten nur mit einer gewissen Langzeitwirkung zu einer nachteiligen Beeinflussung der Funktionsfähigkeit des Wärmeaustauschers führen. Die Ausnutzung des Wärmeinhaltes von Rauchgasen in einem Bereich oberhalb des Taupunktes beziehungsweise der Kondensationstemperatur bedingt zwangsläufig, daß nur ein relativ geringer Anteil der Abwärme rückgewinnbar ist, da bei der Mehrzahl der industriellen Prozesse die kritische Temperatur etwa bei $150^{\circ}$C liegt, das bedeutet, daß das Rauchgas den Wärmetauscher noch mit dieser hohen Temperatur verlassen muß und so ungenutzt in die Atmosphäre freigegeben wird. Eine bereits geringfügig bessere Ausnutzung der im Rauchgas enthaltenen Wärmeenergie und damit Rückführung in den industriellen Prozeß erhöht die ohnehin nie ganz zu vermeidende Kondensationsbildung im Wärmeaustauscher entlang der Rohrleitungen oder dergleichen Trennwände erheblich, wobei sich bestimmte Niederschlagsstellen, etwa im Bereich von Flanschen oder dort wo die Isolation schlecht oder schadhaft geworden ist oder auch wo durch bestimmte Strömungsverhältnisse starke örtliche Abkühlungen auftreten, ausbilden. Diese Schwachstellen führen dann schnell zur Funktionsunfähigkeit des Wärmeaustauschers.

- 7 -

Für das Beispiel der Rückgewinnung der in den Abgasen enthaltenen Wärmeenergie, etwa in der Ziegelindustrie, wird deutlich, von welch hohem wirtschaftlichen Wert der Wärmeinhalt der Abgase ist, und zwar möglichst für Temperaturbereiche, die bis nahe an die Zimmertemperatur heran von Interesse sein können. Abgastemperaturen, etwa von $50^{\circ}C$, bis zu der ein fließfähiger Wärmeträger, wie ein Thermoöl, aufheizbar ist, sind für die Raumheizung von großem Interesse, aber im angeführten Beispiel auch für die Vortrocknung der Rohziegel, durch deren nachfolgenden Brennprozeß die Abgase anfallen. Ein Ziegel- oder Keramikbrennofen liefert eine der gebrannten Ziegelmenge proportionale Abgasmenge und damit proportionale Wärmeenergie, wobei die Temperatur des Rauchgases im Ausführungsbeispiel bei etwa $200^{\circ}C$ liegt.

Dadurch, daß die von dem aufzuheizenden Fließmedium durchströmten Rohrbündel bei der einen Lösungsform drehbar angeordnet sind, können sich nicht die in der bisher bekannten Form bevorzugten Kondensationsbereiche der aggressiven Rauchgaskomponenten und damit lokalisierte Schwachstellen für die Funktionsfähigkeit des Wärmeaustauschers ausbilden, so daß auf eine Ausnutzung der Wärmeenergie der Abgase auch weit unter dem Taupunkt keine Rücksicht mehr zu nehmen ist und damit eine maximale Wärmerückgewinnung erstmalig möglich wird. Das gleiche gilt für die vorteilhafte nebengeordnete zweite Ausführungsform des Wärmetauschers, der mit zwei unterschiedlichen Einheiten an Rohrbündeln arbeitet, wovon die eine Einheit oberhalb der Kondensationstemperatur arbeitend gewissermaßen die Vorteile der bisher trockenen Wärmeaustauscher in sich vereinigt, während die andere unterhalb oder im Bereich der
Kondensationstemperatur wenigstens einiger
aggressiver Komponenten der Abgase arbeitend
durch Zugabe von neutralisierenden und Schadstoffe
auswaschenden Kondensaten oder anderen Reagenzflüssigkeiten ständig in der flüssigen Phase verbleibend gleichfalls das Festsetzen aggressiver
Kondensate ausschließt und damit den Wärmeaustauscher störunanfälliger in seiner Lebensdauer
erheblich verbessert und gleichfalls zu einer
äußersten Ausnutzung des Wärmeinhaltes des Abgases
führt. Auch ist bei den vorliegenden Aufgabenlösungen vorteilhaft, daß spezifische Auslegungen
auf gasförmige und flüssige Fließmedien in
optimaler Weise gegeben sind. Die Rauchgasneutralisierung kann besonders vorteilhaft durch flüssiges
in seiner Konzentration gegebenenfalls durch Verdünnung mit Wasser an den Schwefelgehalt des Rauchgases angepaßtes Ammoniak vorgenommen werden, und
es ist darüber hinaus möglich, die ausgewaschenen
Kondensate in Düngemittel umzuwandeln und damit als
wertvolle Rohstoffe der Industrie beziehungsweise
Landwirtschaft wieder zuzuführen.

Falls erforderlich, ist es auch möglich, durch zusätzlichen Einbau eines Absorbtionskühlers, der selbst
wiederum durch die Rauchgaswärme betreibbar ist,
eine gegebenenfalls erforderliche Abkühlung des
Spülmittels für denWärmetauscher, der als Zweiphasenwärmetauscher mit flüssigen Wärmeträger arbeitet,
zu steuern.

Anhand der beiliegenden Zeichnungen, die in grob vereinfachter skizzierter Form zwei vorteilhafte
Ausführungsbeispiele des den Vorrichtungsteil der

- 9 -

Erfindung wiedergegeben, soll die vorliegende Aufgabenlösung näher erläutert werden. Es bedeutet:

Fig. 1 einen Teilschnitt durch drei Rohre eines Rohrbündels eines Wärmetauschers;

Fig. 2 einen Querschnitt gemäß Fig. 1 durch die Gesamtheit des Rohrbündels;

Fig. 3 ein erfindungsgemäß drehbar angeordnetes Rohrbündel für einen Wärmetauscher in axialer Richtung geschnitten;

Fig. 4 eine Stirnansicht des Wärmetauschers gemäß Fig. 3; und

Fig. 5 eine weitere Ausführungsform eines Wärmetauschers, der in zwei Phasen arbeitend sich durch zwei ortsfest montierte Einheiten kennzeichnet.

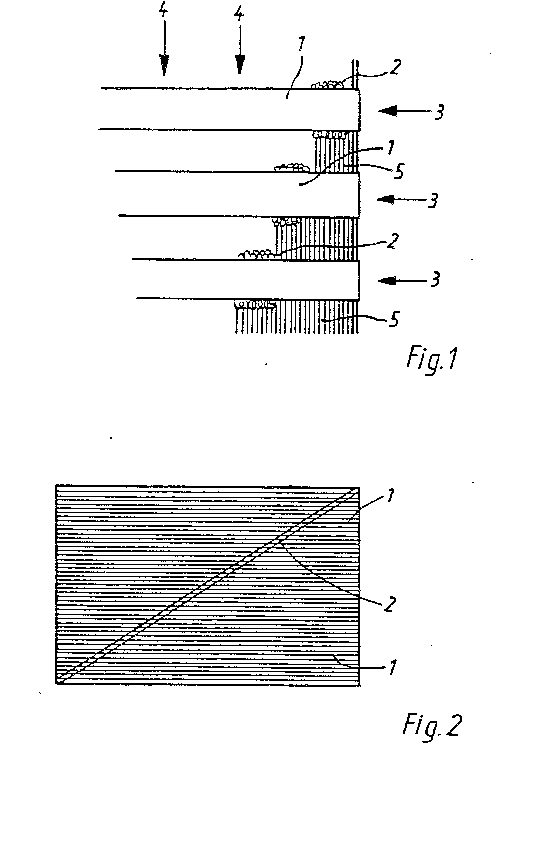

Bei den in den Fig. 1 bis 5 skizziert wiedergegebenen Wärmetauschern strömen die die Wärme abgebenden Abgase in Richtung der Pfeile 4 rechtwinklig zu der Richtung der Pfeile 3(s.Fig.1), also zu der Richtung desjenigen Fließmediums, welches die Abgaswärme aufnimmt.

Die bisherigen Beobachtungen bei solchen Wärmetauschern haben gezeigt, daß, wie Fig. 1 andeutet, die beispielweise in Richtung der Pfeile 3 durch die Rohre 1 einströmende Kaltluft, die durch die Abgase erwärmt wird, in Abhängigkeit der Lage der Wärmetauscherrohre 1 zueinander und zu der Strömungsrichtung der Abgase an unterschiedlichen Stellen Kondensationskrusten 2 bilden, die sich bei ortsfest montierten Rohrbündeln, wie Fig. 2 skizziert andeutet, diagonal durch das Rohrbündel senkrecht zur Strömungsrichtung der Abgase fortsetzen und dort sehr schnell zur Verstopfung oder zumindest sehr starken Reduzierung der Durchlaßkapazität des Wärmetauschers führen.

Diese aus den Fig. 1 und 2 zu ersehende versetzt zueinander angeordneten Kondensationskrusten 2 definieren die Kondensationsbereiche, also diejenigen Bereiche, in denen die Rohre 1 durch die einströmende Kaltluft für die Abgase oder wenigstens einige Komponenten derselben in ihrem Umfangsbereich örtlich den Taupunkt erreichen. Dadurch, daß in Strömungsrichtung für ein Rohrbündel das strömungsabseitig folgende Rohr jeweils im Wärmeschatten des anderen liegt, ergibt sich der dargestellte Versatz der Kondensationskrustenbereiche, der bisher auch bei Gegenstromwärmetauschern nicht vermeidbar war und nur durch periodisches Abspülen mit neutralisierender Lösung, also diskontinuierlichen Betrieb des Wärmeaustauschers zu einer Aufrechterhaltung der Funktionsfähigkeit für den Wärmetauscher Anlaß gab.

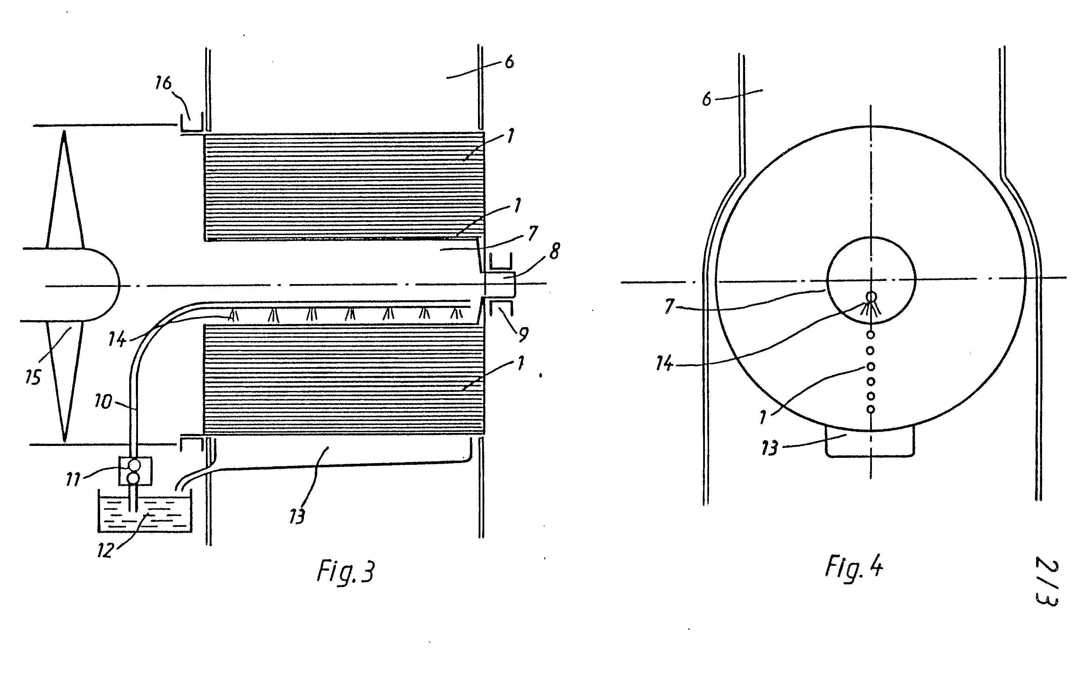

Die in den Fig. 1 und 2 dargestellte Situation wird nun erfindungsgemäß dadurch vermieden, daß das Rohrbündel 1, wie Fig. 3 zeigt, innerhalb eines Abgaskanales 6 drehbar montiert ist. Das Rohrbündel 1, was den senkrechten Abgaskanal 6

- 1| -

waagerecht durchgreift, ist hierfür (s.Fig. 4) etwa trommelförmig angeordnet und besitzt in seinem mittleren Bereich eine hohe Drehachse 7, die auf der einen Seite mit einem Achsstummel 8 in einem Lager 9 gehalten wird und auf der anderen Seite offen ist, wobei die Lagerung des Rohrbündels 1 beziehungsweise der Vielzahl der das Rohrbündel bildenden Rohre 1 auf dieser Seite entlang der Umfangsfläche der Trommelanordnung mittels Lager 16 erfolgt. Sowohl die Lager 9 als auch die Lager 16 bilden gleichzeitig Abdichtungen gegen die Umgebung, so daß die über den Ventilator 15 durch das Rohrbündel 1 wahlweise gesaugte oder gedrückte als Wärmeträger fungierende Luft oder dergleichen gasförmiges Fließmedium an diesen Stellen nicht austreten kann. In die hohe Drehachse 7 hinein erstreckt sich über deren gesamte Länge eine Rohrleitung 10, die über eine Pumpe 11 in einem Flüssigkeitsreservoir 12 endet. Die über die Pumpe 11 durch die Rohrleitung 10 gepumpte Flüssigkeit tritt innerhalb der hohlen Drehachse 7 entlang deren gesamten Länge aus im Abstand zueinander angeordneten Düsen 14 aus und besprüht somit kontinuierlich diejenigen Teile des Rohrbündels 1, die jeweils unterhalb der Sprühdüsenanordnung liegen, so daß durch die Drehung des Rohrbündels 1 die Gesamtheit der Rohre periodisch von der Sprühflüssigkeit umspült und damit das auftretende Kondensat abgewaschen wird. Die Waschflüssigkeit läuft in einem Sumpf 13 zusammen und wird, wie dargestellt, entweder in das Flüssigkeitsreservoir 12 und damit in den Kreislauf über die Pumpe 11 zurückgeführt oder anderweitig abgeleitet, wobei dann das Flüssigkeitsreservoir 12 jeweils durch frische Spülflüssigkeit aufzufüllen ist.

Durch diese rotierende Anordnung des Rohrbündels 1 lassen sich die in Fig. 1 angegebenen ortsfesten Wärmeschatten 5 in Strömungsrichtung der Abgase und damit die nachteiligen versetzt zueinander auftretenden Kondensationskrusten 2 sicher vermeiden, da das Rohrbündel gleichmäßig und allseitig mit den Abgasen beaufschlagt wird.

In diesem Zusammenhang soll noch darauf hingewiesen werden, daß zusammen mit der Spülflüssigkeit über die Rohrleitung 10 und die Düsen 14 zusätzliche Reagenzien, wie beispielsweise flüssiges Ammoniak, welches gezielte Kontaktreaktionen mit dem entstehenden Abgaskondensat hervorbringt, aufgesprüht werden können, mit denen sich dann auch die in Industrieabgasen häufig auftretenden geruchsbelästigenden Komponenten oder andere Schadkomponenten auswaschen lassen.

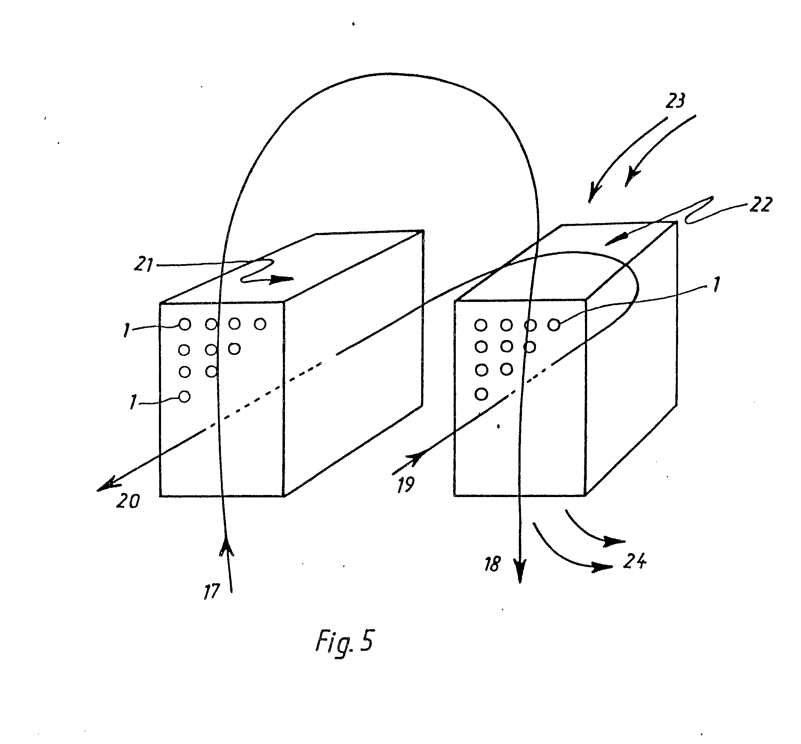

Der Wärmeaustauscher nach den Fig. 3 und 4, bei dem das Rohrbündel drehbar innerhalb des Abgaskanals angeordnet ist, läßt sich vorteilhaft nur als Luft- bzw. Gaswärmeaustauscher einsetzen für die Verwendung als Flüssigkeitswärmeaustauschers, also einer Ausführungsform, bei dem der Temperaturträger beispielsweise Wasser oder Thermoöl ist, ergeben sich hier bestimmte Dichtungsschwierigkeiten, die bei der weiteren vorteilhaften Ausführungsform gemäß Fig. 5 vermieden werden.

Die Anordnung gemäß Fig. 5 kennzeichnet sich im wesentlichen durch zwei ortsfest montierte Rohrbündel in Form von Einheiten 21 und 22, die zwei

0034563

- 13 -

Stufen der Wärmetauschung repräsentieren, nämlich eine sogenannte erste trockene Stufe und eine zweite naße Stufe. Das heiße Industrieabgas 17, also beispielsweise das mit Schwefelverbindungen angereicherte Rauchgas, durchströmt zunächst die erste Einheit 21, die beispielsweise aus einem im Rauchgaskanal angeordneten ersten Bündel von Rohren 1 bestehen kann, und erwärmt hierbei den durch die Rohre 1 fließenden flüssigen Wärmeträger, wie beispielsweise Wasser oder Thermoöl, indem es seine Wärme an die Rohre 1 abgibt. Der flüssige Wärmeträger ist jedoch und das ist wesentlich für diese Anordnung so weit innerhalb der zweiten Einheit 22 vorgewärmt, daß das in die Einheit 21 einströmende heiße Rauchgas 17 beim Verlassen derselben sich noch nicht so weit abgekühlt hat, daß es den Taupunkt bzw. den Kondensationspunkt der aggressiven in gasförmiger Phase innerhalb des Rauchgases vorliegenden Komponenten erreicht oder gar unterschreitet, so daß eine Kondensation dieser Komponenten und damit ein Verstopfen der Einheit 21 durch sich festsetzendes Kondensat ausgeschlossen ist.

Die Vorwärmung des flüssigen Wärmeträgers erfolgt innerhalb des Rohrbündels 1 der Einheit 22, in die der unvorgewärmte kalte Wärmeträger 19 einströmt, um durch den vorab bereits einen Teil seines Wärmeinhaltes abgegeben habenden Rauchgasstrom vorerwärmt zu werden, wobei das Rauchgas auf eine Temperatur abfällt, die unterhalb der Kondensationstemperatur liegt. In der zweiten Einheit 22, also während der naßen Stufe des Wärmeaustauschervorganges, fällt aus dem Rauchgas das in diesem vor Eintritt in die Stufe noch gasförmig vorliegende Wasser als Kondensat aus sowie mögliche weitere kondensierende Komponenten, die durch das anfallende Wasserkondensat kontinuierlich von dem Rohrbündel 1 der Einheit 22 abgewaschen werden. Es ist dabei vorteilhaft, der Naßstufe noch zusätzliches neutralisierendes Kondensat 23 hinzuzusetzen oder auch Reagenzien vorzugsweise in flüssiger Form, die neben der Neutralisierung der aggressiven Komponenten des Rauchgases auch die geruchsbelästigenden Anteile desselben auswaschen wie auch andere Schadstoffe binden, so daß die durch die Pfeile 24 angedeutete, die Einheit 22 verlassende flüssige Kondensatphase beispielsweise der Düngemittelgewinnung zugeführt werden kann.

Das kalte Rauchgas 18, was bis auf 40 oder 50$^\circ$C oder gar Umwelttemperatur abgekühlt ist, verläßt die Einheit 22 ohne nachteilige Belastung für die Umwelt in gereinigter Form und die Reinigung der Einheit 22 erfolgt kontinuierlich durch das in dieser anfallende Kondensat gegebenenfalls zusätzlich durch kontinuierliches oder periodisches Hinzugeben von Wasser oder weiterer Reagenzien, wie flüssigen Ammoniak und dergleichen mehr.

Die Temperaturregelung in der nassen Stufe, also innerhalb der Einheit 22, für die Vorgabe des Kondensationspunktes erfolgt durch entsprechende Dosierung der Einbringung des anfallenden Kondensats 24 und Rückführung desselben, wie mit den Pfeilen 23 angedeutet, in die Einheit 22 gegebenenfalls zusammen mit anderen flüssigen Fließmedien. Das neutralisierte Kondensat kühlt sich auf dem Wege vom Pumpensumpf unterhalb der Einheit 22 bis

- 15 -

zur Rückführung ab, so daß sowohl über die Mengendosierung als auch über die Abkühlung selbst der jeweils gewünschte Taupunkt optimal einstellbar ist.

Die Anordnung in Fig. 5 zeigt schematisch nur eine beispielsweise Ausführungsform, in der die trockene und die naße Wärmetauscherstufe in Form von zwei nebengeordneten Rohrbündeln ausgebildet sind, die in der an sich bekannten Kastenform durch ein entsprechendes Gestell zusammengefaßt in einen Rauchgaskanal ortsfest montiert werden, der die durch den Rauchgasstrom mit dem heißen eintretenden Rauchgas 17 und dem kalten austretenden Rauchgas 18 angedeuteten Pfeil ersichtliche Umlenkung erfährt. Selbstverständlich ist es auch möglich, die beiden Einheiten innerhalb des Rauchgaskanales übereinander anzuordnen, wobei dann darauf zu achten ist, daß das flüssige in der oberhalb der Einheit 21 angeordneten Einheit 22 anfallende Kondensat noch oberhalb der Einheit 21 aus dem Rauchgaskanal abgeführt wird, so daß die Einheit 21 in jedem Falle als trockene Stufe arbeitend nicht mit flüssigem Kondensat in Berührung tritt. Auch ist es denkbar, die Einheiten 21 und 22 in Hintereinanderordnung vorteilhaft in leicht schräg geneigter Lage anzuordnen, wobei die einzelnen Rohrbündel dann in fluchtender Verlängerung zueinander jeweils eine integrale Einheit bilden würden, so daß gewissermaßen die erste Hälfte jedes einzelnen Rohres des Rohrbündels von dem heißen Rauchgas beaufschlagt würde und von der zweiten Hälfte durch eine Rauchgastrennwand getrennt ist, wobei nach Verlassen

- 16 -

des Rauchgases dieses umgelenkt durch die zweite
in Abwärtsrichtung geneigte Rohrhälfte beziehungsweise um diese herum strömt, in der
dann die flüssigen Kondensate anfallend abgewaschen werden.

- 1 -

Patentansprüche

1. Verfahren zur Beseitigung von die Umwelt belastenden, in Rauchgasen von Feuerungsanlagen aller Art, beispielsweise Kraftwerken, Gießereien oder dergleichen, anfallenden Schadstoffen, wie Schwefelverbindungen in Form von $SO_2$ und $SO_3$, Fluor, Chlor, Stickstoffverbindungen und dergleichen, d a d u r c h  g e - k e n n z e i c h n e t , daß in die die Rauchgase ins Freie entlassende Leitung flüssiges, in seiner Konzentration gegebenenfalls durch Verdünnung mit Wasser an den Schwefelgehalt der Rauchgase angepaßtes Ammoniak intermittierend eingeblasen wird.

2. Verfahren nach Anspruch 1, dadurch gekennzeichnet, daß das Ammoniak durch Düsen in Impulsen unter einem, eine starke Vernebelung des Ammoniaks in dem Rauchgas erzeugenden Druck, eingeblasen wird.

3. Verfahren nach Anspruch 1 bis 2, dadurch gekennzeichnet, daß das Ammoniak mit unterschiedlicher Impulsdauer und/oder -frequenz eingeblasen wird.

4. Verfahren nach den Ansprüchen 1 bis 3, dadurch gekennzeichnet, daß neben Ammoniak zur Beseitigung weiterer in den Rauchgasen anfallender, die Umwelt belastender Verbindungen zusätzliche, diese Verbindungen in unschädliche Verbindungen überführende Reagenzien eingeblasen werden.

- 2 -

5. Verfahren nach Anspruch 1 bis 4, dadurch gekennzeichnet, daß in den Rauchgasen anfallende Fluoride $F_x$ mit Kalklauge und/ oder Silicagel gebunden werden.

6. Verfahren nach Anspruch 1 bis 5, dadurch gekennzeichnet, daß in den Rauchgasen anfallende Chloride $CL_x$ mit Kalklauge und/ oder Silicagel gebunden werden.

7. Verfahren nach Anspruch 1, dadurch gekennzeichnet, daß in den Rauchgasen anfallende Stickstoffoxide $NO_x$ mit Phosphorsäure gebunden werden.

8. Verfahren nach Anspruch 1 bis 7, dadurch gekennzeichnet, daß jede oder einzelne Reaktionsverbindung getrennt durch eine oder mehrere Düsen parallel oder in gegenseitigen Intervallen intermittierend unter Druck eingeblasen werden.

9. Verfahren nach Anspruch 1 bis 8, dadurch gekennzeichnet, daß nicht miteinander reagierende Mischungen der Reaktionsverbindungen eingeblasen werden.

10. Vorrichtung zur Durchführung des Verfahrens nach den Ansprüchen 1 bis 9 mit einem Wärmeaustauscher für flüssige und/oder gasförmige Abwärmeträger zur Rückführung der gewonnenen Wärmeenergie in den industriellen Prozeß oder anderweitigen Anwendung, bestehend aus bündelartig parallel laufenden Rohren oder dergleichen wärmeübertragenden Trennwänden, die ein heißes

- 3 -

Fluid von einem kälteren aufzuwärmenden Fluid trennen, d a d u r c h g e k e n n - z e i c h n e t , daß ein Teil der Gesamtheit der von einem Fluid durchflossenen Rohrbündel (1) oder dergleichen Trennwände von einer Flüssigkeit kontinuierlich beaufschlagbar angeordnet ist.

11. Vorrichtung nach Anspruch 10, dadurch gekennzeichnet, daß der Wärmetauscher in Form eines den Querschnitt eines Abgasschachtes (6) oder dergleichen Kanal durchgreifenden drehbaren Rohrbündels (1) ausgebildet ist, in dessen hohler Drehachse (7) eine die Flüssigkeit über die Rohrlänge verteilende Sprühvorrichtung (10,14) eingebracht ist.

12. Vorrichtung nach Anspruch 10 und 11, dadurch gekennzeichnet, daß der Sprühvorrichtung (10,14) eine Flüssigkeit zugeführt und über Düsen (14) von dieser verteilbar ist, die das bei der Abkühlung des Abgases anfallende Kondensat mit sich abführend neutralisiert.

13. Vorrichtung nach Anspruch 11, dadurch gekennzeichnet, daß der Sprühflüssigkeit bestimmte chemische Kontaktreaktionen auslösende Reagenzien zugesetzt sind, die geruchsbelästigende und andere Schadstoffe binden.

14. Vorrichtung nach Anspruch 10, dadurch gekennzeichnet, daß die Gesamtheit des Rohrbündels (1) oder dergleichen Trennwände aus wenigstens zwei ortsfest montierbaren Einheiten (21,22) besteht, von denen der ersten Einheit (21) das

- 4 -

heiße Abgas (17) unmittelbar zugeführt ist, während sie von einem durch die zweite Einheit (22) bereits vorgewärmten flüssigen Wärmeträger mit einer oberhalb der Kondensationstemperatur des Rauchgases liegenden Temperatur durchströmt ist, und von dem der zweiten Einheit (22) das aus der ersten Einheit (21) austretende Abgas zugeführt und hier mittels des kalten Wärmeträgers (19) bis zum und unter den Kondensationspunkt wenigstens einiger Abgaskomponenten abkühlbar ist, und daß die zweite Einheit (22) mit zusätzlichem aus einer Rauchgasneutralisierung anfallenden beziehungsweise diese bewirkenden Kondensat (23) beaufschlagbar ist.

15. Vorrichtung nach Anspruch 10, dadurch gekennzeichnet, daß die Sprühvorrichtung (10,14) seitlich im Bereich des Rohrbündels (1) innerhalb des Abgasschachtes (6) angeordnet ist.

0034563

1/3

Fig.1

Fig.2

Fig. 4

Fig.3

Fig. 5

0034563

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | DE - A - 1 669 319 (WEIRITAM) <br> * Ansprüche 1, 6, Seite 5, Absatz 2; Fig. 4 * <br> -- | 1,2, 10,14, 15 |
| X | DE - A1 - 2 550 635 (MITSUBISHI CHEMICAL INDUSTRIES) <br> ** Ansprüche 1, 2, Seite 5, Absatz 2; Fig. 5 bis 8 * <br> -- | 1,2, 10,14, 15 |
| | DE - A - 1 544 .094 (H. PETERSEN) <br> * Anspruch 1 * <br> -- | 1 |
| | DE - A - 1 544 099 (H. PETERSEN) <br> * Anspruch 1 * <br> -- | 1 |
| | DE - A - 2 053 549 (SHALE CORP.) <br> * Anspruch 1; Seite 11, Absatz 1; Seite 16, Absatz 3; Seite 17, Absatz 2 * <br> -- | 1,4-6 |
| | DE - A1 - 2 425 377 (ESSO RESEARCH AND ENGINEERING CO.) <br> * Anspruch 1 * <br> -- | 1 |
| | DE - A1 - 2 448 647 (HITACHI) <br> * Anspruch 1; Seite 5, Absatz 2, Positionen 18, 19 * <br> -- <br> ./.. | 1,2,4, 10 |

**KLASSIFIKATION DER ANMELDUNG (Int. Cl.³)**

B 01 D 53/34

**RECHERCHIERTE SACHGEBIETE (Int. Cl.³)**

B 01 D 53/34
F 28 C 3/06
F 28 D 7/00
F 28 D 9/02
F 28 D 11/04

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 30-04-1981 | KÜHN |

EPA form 1503.1 06.78

Europäisches
Patentamt

**EUROPÄISCHER RECHERCHENBERICHT**

| EINSCHLÄGIGE DOKUMENTE | | | KLASSIFIKATION DER ANMELDUNG (Int Cl.³) · |
|---|---|---|---|
| Kategorie | Kennzeichnung des Dokuments mit Angabe, soweit erforderlich, der maßgeblichen Teile | betrifft Anspruch | |
| | DE - A1 - 2 550 231 (MITSUBISHI CHEMICAL INDUSTRIES)<br>* Anspruch 1; Seite 4, Zeile 16 *<br>-- | 1,2 | |
| | DE - A1 - 2 727 649 (MITSUBISHI CHEMICAL INDUSTRIES)<br>* Anspruch 1 *<br>-- | 1 | |
| | DE - B1 - 2 832 397 (DIDIER ENGINEERING)<br>* Anspruch 1 *<br>-- | 1 | **RECHERCHIERTE SACHGEBIETE (Int. Cl.³)** |
| | DE - A1 - 2 902 706 (MITSUBISHI JUKOGYO)<br>* Anspruch 1 *<br>-- | 1 | |
| | GB - A - 826 221 (CHEMICAL CONSTRUCTION)<br>* Anspruch 1; Seite 1, Zeile 50 *<br>-- | 1,2 | |
| | GB - A - 1 435 435 (DUPONT RESEARCH AND INVESTMENT SERVICES)<br>* Fig. 1 *<br>-- | 11 | |
| | GB - A - 1 474 733 (DUPONT RESEARCH AND INVESTMENT SERVICES)<br>* Fig. 1 *<br>-- | 11 | |
| | ./.. | | |

**Europäisches Patentamt**

## EUROPÄISCHER RECHERCHENBERICHT

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| | VERFAHRENSTECHNISCHE BERICHTE, 1967 Leverkusen R. KIYOURA "Untersuchungen über das Ausscheiden von Schwefeldioxid aus heißen Rauchgasen" Referat B6704/122 & Staub-Reinhaltung der Luft, Band 26, Nr. 12, 1966 Seiten 524 to 525 -- | 1 | |
| | VERFAHRENSTECHNISCHE BERICHTE, 1967 Leverkusen P. ETOC "Ammoniak beseitigt Säureverschmutzung bei ölgefeuerten Anlagen" Referat B6731/144 & J. Inst. Fuel, Band 40, Nr. 317, 1967, Seiten 249 bis 251 -- | 1 | RECHERCHIERTE SACHGEBIETE (Int. Cl.³) |
| | CHEMIKER-ZEITUNG. CHEMISCHE APPARATUR, Band 84, Nr. 2, 1960 "Wiedergewinnung von Schwefel aus Abgasen" Seite 49 & The Chemical Age, Band 82, 1959 Seite 571 -- | 1 | |
| A | DE - C - 440 324 (BAMAG-MEGUIN) * Anspruch 1 * -- ./.. | | |

Europäisches
Patentamt

**EUROPÄISCHER RECHERCHENBERICHT**

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| A | <u>DE - B - 1 051 450</u> (RUHRSTAHL)<br><br>* Spalte 1, Zeilen 44 bis 47 *<br><br>-- | | |
| A | <u>DE - A1 - 2 756 186</u> (FIAT)<br><br>* Anspruch 1 *<br><br>---- | | |

RECHERCHIERTE
SACHGEBIETE (Int. Cl.³)

EPA Form 1503.2   06.78